(19)

Europäisches
Patentamt
European
Patent Office
Office européen
des brevets

(11)  **EP 3 591 596 A1**

(12)  **EUROPEAN PATENT APPLICATION**

(43) Date of publication:
**08.01.2020  Bulletin 2020/02**

(51) Int Cl.:
*G06Q 10/08* (2012.01)      *B23P 19/00* (2006.01)

(21) Application number: **18182116.6**

(22) Date of filing: **06.07.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(71) Applicants:<br>• **ThyssenKrupp Metalúrgica Campo Limpo Ltda.**<br>  **13231-900 Campo Limpo Paulista-SP (BR)** | • **thyssenkrupp AG**<br>  **45143 Essen (DE)**<br><br>(72) Inventor: **Ansgar Hacker, Patrick**<br>  **Jundiai - São Paulo (BR)**<br><br>(74) Representative: **Kilchert, Jochen**<br>  **Meissner Bolte Patentanwälte**<br>  **Rechtsanwälte Partnerschaft mbB**<br>  **Widenmayerstraße 47**<br>  **80538 München (DE)** |

(54)  **A COMPUTER IMPLEMENTED METHOD AND PROCESS FOR CRANK TRAIN ASSEMBLY**

(57)  This disclosure relates to a computer-implemented method for assembling a crank train and a process for the manufacture of a crank train. The disclosure further relates to the storing of individual components, used in the assembly of a crank train, and their properties; the selection of two or more components used to assemble the crank trains and in particular, the methods used for selecting said components to optimise the finalised crank train, and displaying/outputting the selected components for assembly. A manufacturing process is also disclosed herein which describes the implementation by a computer and the assembly of the selected components.

Fig. 1

EP 3 591 596 A1

**Description**

Technical Field

The present disclosure relates to a computer-implemented method for assembling a crank train and a process for the manufacture of a crank train. The disclosure further relates to the selection of components used to assemble the crank trains and in particular, how said components are selected to optimise the finalised crank train.

Background

During conventional and current production processes, similar components are normally grouped together into batches. These batches of alike components are assigned general and average measurement data which applies to many of the components within said batch. This measurement data may include some general information regarding the dimensions of the batch of components as a whole, or it may include such things as barcode data for the designation of parts within a system.

Currently, during the assembly of such products as a crank train the user selects individual components at random from each of the batches, for example a connecting rod, bearing shell, piston pin and the piston. Each of these components would be chosen from the batch of similar components which have been assigned general values for dimensions and/or other property factors. When components are selected in this manner from batches with generally assigned values, the crank train which is formed of these components is not optimized and may lack the efficiency that a more specifically chosen crank train could provide. An example of this may be a gap between the connection point of the connecting rod and a piston bore, therefore providing some play between the two and thus reducing the efficiency of the energy transfer between the two parts.

When components are selected at random from batches in the traditional fashion there is an increase in the amount of scrap produced related to an undesired assembly or a wider range of dimensional tolerance is necessary. High inefficiency levels arise when batches of components are used which have been assigned general values for such properties as dimensions, tolerances etc.; thus it would be beneficial to provide an alternative mean of component selection such that the efficiency of the finalized crank train or powertrain may be increased and optimized.

Process' are often given a capability value, which provides an indication of the ability of a process to output within specification limits. Calculating the capability according to the following equation, estimates what a process is capable of producing if the process mean were to be centered between the specification limits.

$$C_p = \frac{USL - LSL}{6\sigma}$$

Wherein the USL represents upper specification limit, the LSL represents the lower specification limits, and the σ represents the standard deviation of the process specification mean.

Process' with a high capability are those which produce a tight variation (small standard deviation) in the produced components, which fall between the upper and lower limits. This indicates that a process is more capable of delivering said component within the specified tolerances.

|  |  |
|---|---|
| Patent Document 1: | German Patent Application WO 2017054820 |
| Patent Document 2: | US Patent Application<br>US 20170199518 A1 |

Patent Document 1 discloses a computer-implemented method for managing data relating to a bearing. The bearing comprises multiple bearing components, and wherein the bearing is produced from the multiple bearing components in a production method. The method is used to manage data within a warehouse through the use of barcodes placed on parts. This data is usable by both the manufacturer and the customer. Patent Document 1 is directed towards the handling of data of data within a warehouse scenario and the storing of said data in an accessible and manageable format for both customer and manufacturer. The identification of parts within Patent Document 1 further relates to the monitoring of parts for stock purposes not manufacturing method.

Patent Document 2 discusses a method of logistically manufacturing a product when components of said product are located in different locations. Wherein the product is a functional unit composed of at least two parts each of which is located at a separate location. Patent Document 2 is primarily concerned with the transportation and the simulation of assembly of the parts prior to transportation based on the production capabilities.

It is thus an object of the present disclosure to provide crank trains or powertrains with increased efficiency and at a reduced cost and time for assembling.

Summary

The present disclosure is directed towards a computer-implemented method for assembling a crank train. This computer-implemented method comprises the steps of storing, on a computer readable medium, a database of individual crank train components; selecting from the database each component of the crank train to achieve an optimised crank train configuration and displaying/outputting said selection of the components. The selection of each of the components of the present disclosure is undertaken such that all of the components of the crank train are selected such that one or more of the properties of each component are compatible with one or more of the properties of another component. An example of this would be that the diameter of the journal with which a connecting rod connects to such that the eye at the end of the connecting rod is matched in size to the diameter of the journal with which it is to connect. This reduces the cost of the component's manufacturing by increasing the baseline tolerances of the parts but still guaranteeing that the parts will fit together. Further advantages are that the invention reduces engine friction and increases the robustness of the system. The properties of the components may be physical dimensions, component tolerances, component mass, mass distribution of the assembled crank train. One or more of the properties of the one or more components can be equal to or above a minimum threshold of the one or more properties to be selected or one or more of the properties of the one or more components may not exceed a maximum threshold of the one or more properties to be selected.

In some cases the components may be selected from groups of components where the components are grouped by their properties. Alternatively, however, the components may be considered for selection and selected in order of one or more of their properties.

In other cases, the components may be selected using a searching algorithm which may calculate which component is selected based on one or more properties of the one or more components already selected and/or that the component to be selected will be connected to. The matching algorithm may alternatively calculate which component is selected based on one or more projected properties of the fully assembled crank train. This allows for increased efficiency of the final product.

The components of the crank train may also be selected from one or more groups wherein each group consists of components with similar dimensions and/or tolerances and/or masses. Any of the above steps of storing, component selection and display/output may be implemented by a computer and/or over a network and/or by data processing device. Furthermore, the method may further comprise the step of controlling a production line and/or automated machinery to assemble the components selected.

Furthermore, when parts are selected in this manner, it is possible to optimise the fit of said parts and possible to match parts which are compatible with each other within a batch using the individual values assigned to each component. This matching of components based on the properties assigned to each component allows a greater number of components used to form the crank train to be matched with the other necessary components of the crank train therefore reducing the number of components which cannot be matched and thus end up as scrap and also reducing the variation of such final desired key feature. This allows a saving of production costs especially for assembling.

The present disclosure also includes a process for the manufacture of a crank train which utilises the computer implemented method or software discussed above as well as some variations of this computer implemented method or software. The process for the manufacture of the crank train includes a computer or network to implement the method discussed above and the further additional process of assembling the selected components to form the final crank train. This assembling of components may be achieved through automated production line or assembled by hand.

The process for manufacture may further comprise the step of the user inputting a preference for how the components of the crank train may be selected. Such preferential selection may include, for example, the preference of selection of components with similar dimensions or with similar tolerance or with similar mass, via initial input conditions; thus providing adaptability for the needs of the user. The computer and/or network and/or data processing device used in the manufacturing process may also be integrally formed as part of a production line.

The crank train that is assembled by utilizing this method of selection of parts will optimize the final product by removing/reducing such undesirable factors such as play between components and/ or will allow for higher tolerances of the final products and/ or will allow for better noise, vibration, and harshness (NVH) results. Furthermore, utilizing these methods will significantly reduce the scrap produced from unmatched/unused parts or making possible wider tolerances in the crank train parts. As the finalized engine/crank train is optimized there might be an increase in power transmission as less is lost through play and there might be lower emissions through greater efficiency of the system.

The present invention thus relates to a computer-implemented method and manufacturing process in the form of software, that stores and displays/outputs the properties of each component within each batch such that components may be selected based on their specific properties and not the properties of the batch as a whole. This allows for the most efficient combination of components, for example crankshafts, connecting rods, bearing shells, piston pins and pistons as well allowing for a reduction of costs for the component's manufacture. Further advantageous effects of the present disclosure will be set out in the detailed description below.

Brief Description of Drawings

FIG. 1    illustrates a flow chart of the computer-implemented method showing the number of ways by which components of the crank train may be selected;

FIG. 2    illustrates an example of the selection of a component of the crank train based on two other components of the crank train.

Detailed Description of the Figures

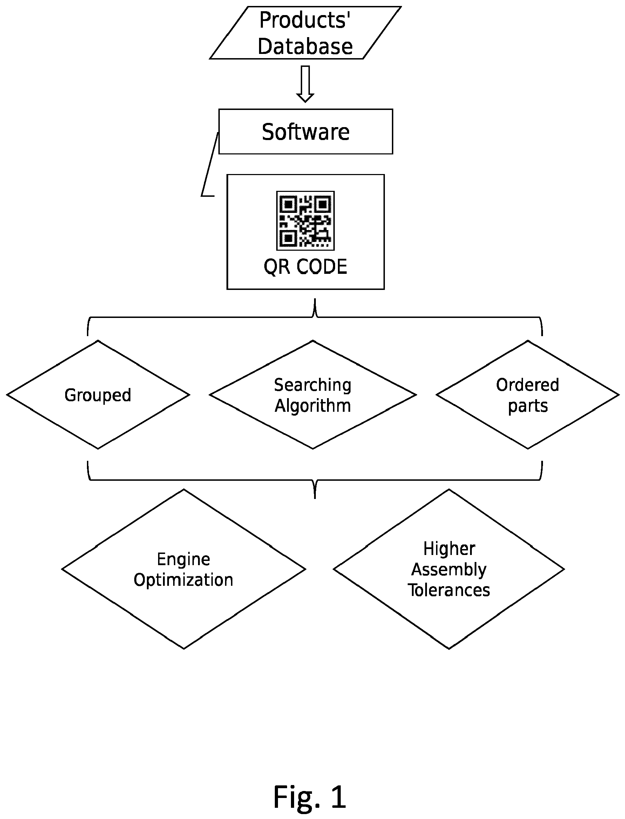

Fig. 1 shows an example flow chart of the computer-implemented method for assembling a crank train. In some cases the method may be present on a computer or data processing device such that it may be executed and it may further be comprised of program code. As can be seen in Fig. 1, all properties of each component are stored in a product database. The product database, containing the properties of each component, may be located on a computer readable medium or on a server within a network, cloud etc. These properties may include, but are not limited to, specific dimensions of each of the parts of each of the components, specific tolerances of each of the parts of each of the components and the mass of each of the components as well as their mass distribution. Further properties may also be included such that each of the technical properties of the individual components are fully described within the database. In addition to the properties of each of the components, each part may also be designated an identifier based on the batch that it originated from or based on the type of part it is; as an example connecting rods may be designated part no. 1 while bearing shells may be designated part no. 2, etc. The computer-implemented method may store the above-described information on a computer readable medium or within the cloud, online server etc.

The computer-implemented method/software may then select from this database all the necessary components to form a crank train/ powertrain. The selection of said components may be undertaken with the goals of engine optimisation or the higher assembly tolerances in mind, possibly based on initial conditions as discussed later. As can be seen in Fig. 1, a Quick Response (QR) code may be input into the software to identify which of these two goals is most desirable to be achieved. QR Codes may also be used to identify each of the components within the database or subsections of said components or even containing the dimension coded by, not singularly, but group way.

The computer-implemented method of the present disclosure will then select each of the components of the crank train such that one or more properties of the first component selected will be matched and/or symbiotic with the properties of the at least one other component selected for the crank train. This may allow for a reduction of play within the system because the components may be dimensionally matched and thus can be assembled together with increased precision compared to unmatched components. Furthermore, the crank train assembled from components chosen from the computer-implemented method/software may have a higher overall assembled tolerance due to the combination of tolerances of each of the components selected by the method/software. In general the one or more of the properties of each of the components selected by the program/software/method may be linked, via matching of dimensions, tolerances, masses etc., to either one or more properties of the component(s) to which the first component is connected or to one or more projected properties of the final product e.g. crank train.

There are a number of ways which the above computer-implemented method/software may select the components of the crank train. These will now be described in relation to the main embodiments of the invention.

The first embodiment relates to a method for selection of the components wherein the components are ordered by the dimensions prior to selection and then selected based upon this ordering of dimensions. For example if a crank shaft with journals of large diameter is chosen by the software, the software will then search in the available supplied batch for a suitable bearing shell with an inner diameter larger than the diameter of the crank shaft journals. The searching in this example will be achieved by assessing the inner diameter of each of bearing shells in increasing or decreasing order until the bearing shell with the minimum workable inner diameter is found; thus achieving the best fit. The same selection method will then be applied to each component until all the necessary components of the crank train have been selected. Such selection process may start from any component as the initial component of the crank train assembly and select the other components around said initial component.

Selecting the parts based on the order of dimensions allows for the selection method/software to find the closest match of each component to the others within the crank train system thus allowing for a reduction of scrap (parts per million). This reduction in scrap (PPM) is significant as a higher number of parts can be matched to their closest connecting parts to form a crank train system whereas during random selection there will be more components left which are simply incompatible with each other. There is also the potential to expand the diameter tolerance up to +/-0.050mm. In addition, the variation of final key feature of system is reduced making possible to obtain system with reduced variation.

The second embodiment of the present invention is that the selection of the components for a crank train may be selected from a number of groups of components. In this embodiment each of the components within the database are grouped together with other components with similar dimensions. This is different from the batches of components which are assigned a generic single value for certain dimensions and tolerances as the groupings would be subsets of the batches of components.

Like components, having individual properties of dimensions and tolerances, may be grouped together within the original batches, based on their individual properties, by the computer-implemented method/software. Selection of the component to be used from each group is then randomised by the selection method such that a crank train may be assembled which has components with properties within the ranges set out by the groups. This allows for increased accuracy of fit without specifically searching every individual part within the database and also provides the option that there are multiple candidate components for each component to be matched with. There is also the potential to expand the diameter tolerance to +/-0.025mm.

Selecting the components based on the group to which they are assigned allows for the selection method/software to find the closest match of each component to the others within the crank train system thus allowing for a reduction of scrap (parts per million). This reduction in scrap (PPM) is significant as a higher number of parts can be matched to their closest connecting parts to form a crank train system whereas during random selection there will be more components left which are simply incompatible with each other.

Individual crank train components may be grouped in a number of different ways to the above, for example they may also be grouped based on the mass or tolerances of each component. A further grouping could be a grouping of components with through holes of similar diameter or journals of similar diameter. In this instance the different types of components will be mixed together, for example connecting rods and bearing shells, but would be grouped such that the components have an increased likelihood of compatibility.

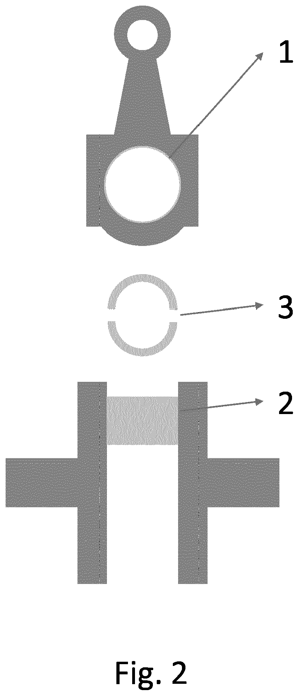

Fig. 2 shows an example of some of the components of the crank train which may be selected either through ordering each component based on individual dimensions or using grouping of components or a further embodiment of selection, algorithmic searching. The third embodiment of the present invention will now be described with reference to Fig. 2.

As depicted in Fig. 2 three exemplary components are shown which are selected in the assembly of the crank train. In this embodiment algorithmic searching is employed at the selection step to select appropriate components which produce an improved final assembly when compared to randomised selection. The computer-implemented method/software selected, in the case of this example for illustrative purposes, a connecting rod 1 and a crank shaft 2. The selected connecting rod 1 will have its own properties, one of which will be the diameter of the large eye (A), as will the crank shaft 2, in this case the pin journal diameter (B).

A searching algorithm may be employed by the computer-implemented method/software at the selection stage to then find the correct component to match those already selected by the method. In the case of Fig. 2 the algorithm will search and select the appropriate bearing shell 3, with bearing shell thickness (C), to fit the properties of the connecting rod 1 and the crank shaft 2. In this example the algorithm will calculate the final bearing gap once the three parts have been assembled and make the selection of the final part, the bearing shell, based on the calculated final bearing gap. The final bearing gap is calculated in the following manner:

$$\text{Final Bearing Gap} = A - B - 2C$$

The selection of the bearing shell may then be made, utilising the calculated final bearing gap, such that either the final bearing gap is reduced to the minimum possible from the selection of bearing shells 3 within the database or the final bearing gap is below a certain threshold. This method of selection allows for a reduction of scrap when compared to the randomised selection.

While this embodiment has been described in relation to the final bearing gap and the three components discussed above, this should be understood only to be an example for illustrative purposes. It should be understood that such a searching algorithm may be utilised at the selection stage of the method for the selection of any appropriate component based on the properties of other components with which said selected component may be connected. Furthermore, the algorithm may be used to calculate such properties of the final crank train such as the mass distribution and/ or overall tolerances and thus select the individual components based on such calculations such that the tolerances are increased and/ or the mass distribution is as desired by the user. It should also be understood that the algorithmic searching may be combined with either of the other two selection methods to further improve the selection of components used to form the crank train.

Prior to any of the above selections methods taking place there may be some initial information and/or conditions input to the computer-implemented method/software such that the selection process may be undertaken under such criteria. For example, there may be a desired range of tolerances for the completed system input such that the selection of parts falls within this tolerance. Another example is that, in the example discussed in the third embodiment, the final bearing gap may be specified to be within an acceptable range or other values may be specified such as minimum journal diameter or connecting rod 1 large eye diameter. Such inputs may be part of pre-set settings, which may be stored on a computer readable medium, cloud or the like for use with the computer implemented method/software. Alternatively, the user may manually select, at the time of implementing the method or prior, the desired settings which will result in the selection of the correct parts for forming the most efficient crank train for the user's needs.

The computer-implemented method may be employed on a local computer or like device such as a portable device, i.e. tablet or smartphone, or may be accessible and employed as part of a larger production network spread across the internet or situated on a local network. Data from the database, from which selection is made, may be stored locally on the user's computer, possibly in a warehouse, or on a network for private or public access; thus allowing for customers to utilise the software as well as manufacturers. The database of components and their properties as well as the final parts which have been selected to be assembled are then output to the user either over a network or locally; thus the components may then assemble the crank train from the selected parts.

In any of the above examples, once the selection of parts for the crank train has been completed by the method/software, implemented by a computer, the components may then be assembled into the finished crank train as part of a process for manufacture. This assembly may be automated within a manufacturing plant/warehouse or may be assembled by hand both of which may take place as part of a larger assembly line.

The crank train that is assembled by utilizing this method of selection of parts will optimize the final product by removing/reducing such undesirable factors such as play between components and will allow for higher tolerances of the final products. Furthermore, utilizing these methods will significantly reduce the scrap produced from unmatched/unused parts. As the finalized engine/crank train is optimized there will be an increase in power transmission as less is lost through play and there will be lower emissions through greater efficiency of the system. In addition, the method of selection of the crank train parts may be based on the mass of each of the components, in order to have a better mass distribution and/ or minimize the run-out along the crank train that will be assembled. Therefore, the crank train will have better Noise, Vibration and Harshness (NVH) results and will increase the lifetime of the engine/ crank train.

The process by the above outlined methods also has a far higher capability rating than a method by which the individual components are chosen randomly, when forming the crank train.

Although the present disclosure has be described in relation to a crank train, the same method/software may be employed to select the components of a full power train and engine such that each component may be optimized through the selection its constituent components. The skilled person would also recognize that this storing and displaying/outputting of the individual components of a system which may then be optimally selected, using the above methods, to produce an enhanced final product may be applied to a number of other mechanical scenarios, e.g. gearboxes or industrial machinery, without departing from the spirit or scope of the invention.

Reference Numerals

1    Connecting Rod
2    Crank Shaft
3    Bearing Shell

**Claims**

**1.** A computer implemented method for selecting components of a crank train comprising the steps of:

storing, on a computer readable medium, a database of individual components and their properties;
selecting from the database two or more components,
displaying to the user the selected components,
wherein each of the two or more components of the crank train are selected such that one or more properties of each component are matched to one or more properties of another component or one or more properties of the assembled crank train.

**2.** The method of claim 1, wherein the properties of the components are physical dimensions and/or component tolerances and/or component mass and/or mass distribution of the assembled crank train.

3. The method of any one of the preceding claims, wherein the components are selected from groups of components wherein the components are grouped by their properties.

4. The method of any one of claims 1 or 2, wherein the components are considered for selection in order of one or more of their properties and then selected.

5. The method of any of the preceding claims, wherein one or more of the properties of the one or more components must be equal to or above a minimum threshold of the one or more properties to be selected or one or more of the properties of the one or more components must not exceed a maximum threshold of the one or more properties to be selected

6. The method of any one of the preceding claims, wherein the components are selected using a searching algorithm.

7. The method of claim 6, wherein the searching algorithm calculates which component is selected based on one or more properties of the one or more components already selected and/or that the component to be selected will be connected to, or wherein the searching algorithm calculates which component is selected based on one or more projected properties of the fully assembled crank train.

8. The method of any of the preceding claims, wherein the components are selected from one or more groups wherein each group consists of components with similar dimensions and/or tolerances and/or masses.

9. The method of any of the preceding claims, wherein the method is implemented by a suitably programmed computer and/or over a network and/or by data processing device.

10. The method of any of the preceding claims, wherein the method further comprises the step of controlling a production line and/or automated machinery to assemble the components selected.

11. The method of any of the preceding claims, wherein the matching of components allows individual component tolerances to be expanded to at least +/- 0.025m, preferably +/- 0.050mm.

12. The method of any of the preceding claims, wherein the matching of components allows for reduced mass variation between components and thus improved NVH characteristics.

13. A manufacturing process of a crank train, the process comprising the steps of:

    using a suitably programmed computer or network or data processing device to implement the method of any one of claims 1 to 12
    assembling the selected components to form the crank train.

14. The manufacturing process of claim 13, wherein the computer or network or data processing device is integrally formed as part of a production line.

15. The manufacturing process of any one of claims 13 to 14, further comprising the step of inputting initial conditions.

Fig. 1

**Fig. 2**

Europäisches
Patentamt

European
Patent Office

Office européen
des brevets

# EUROPEAN SEARCH REPORT

Application Number

EP 18 18 2116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/326851 A1 (WOODHULL CHARLES B [US] ET AL) 12 December 2013 (2013-12-12) * paragraphs [0003] - [0009], [0027] - [0040], [0063], [0071]; figures 6a,6b,17a * | 1-15 | INV. G06Q10/08 B23P19/00 |
| X | EP 1 319 464 A1 (HONDA MOTOR CO LTD [JP]) 18 June 2003 (2003-06-18) * paragraphs [0002] - [0010], [0068], [0073], [0078], [0159], [0160]; figures 2,4 * | 1-15 | |
| X | US 6 453 546 B1 (KENNICOTT THOMAS C [US] ET AL) 24 September 2002 (2002-09-24) * column 1, line 39 - line 60 * * column 7, line 13 - line 33 * | 1-15 | |
| X | US 2012/101863 A1 (TRUAX BYRON EDWIN [US] ET AL) 26 April 2012 (2012-04-26) * paragraphs [0027], [0038] * | 1-15 | |
| X | Anonymous: "Interchangeable parts - Wikipedia", , 22 June 2018 (2018-06-22), XP55523775, Retrieved from the Internet: URL:https://en.wikipedia.org/w/index.php?title=Interchangeable_parts&oldid=847084366 [retrieved on 2018-11-14] * "Selective assembly" * | 1-15 | TECHNICAL FIELDS SEARCHED (IPC) G06Q B23P |

-/--

The present search report has been drawn up for all claims

| Place of search | Date of completion of the search | Examiner |
|---|---|---|
| Munich | 14 November 2018 | Stratford, Colin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 18 2116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Larry Carley: "Maintaining Your Balance: Engine Building Tips to Reduce NVH and Increase Life", Engine Builder Magazine, 25 November 2013 (2013-11-25), XP055523817, Retrieved from the Internet: URL:https://www.enginebuildermag.com/2013/11/maintaining-your-balance-engine-building-tips-to-reduce-nvh-and-increase-life/ [retrieved on 2018-11-14] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 14 November 2018 | Stratford, Colin |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

page 2 of 2

## EP 3 591 596 A1

**ANNEX TO THE EUROPEAN SEARCH REPORT
ON EUROPEAN PATENT APPLICATION NO.**

EP 18 18 2116

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2018

| Patent document cited in search report | | Publication date | Patent family member(s) | | Publication date |
|---|---|---|---|---|---|
| US 2013326851 | A1 | 12-12-2013 | CN 103488100 A<br>CN 103488101 A<br>US 2013326851 A1<br>US 2013331975 A1<br>US 2015331410 A1 | | 01-01-2014<br>01-01-2014<br>12-12-2013<br>12-12-2013<br>19-11-2015 |
| EP 1319464 | A1 | 18-06-2003 | AU 7873201 A<br>EP 1319464 A1<br>JP 3745334 B2<br>JP WO2002022305 A1<br>US 2004007311 A1<br>WO 0222305 A1 | | 26-03-2002<br>18-06-2003<br>15-02-2006<br>22-01-2004<br>15-01-2004<br>21-03-2002 |
| US 6453546 | B1 | 24-09-2002 | NONE | | |
| US 2012101863 | A1 | 26-04-2012 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017054820 A
- US 20170199518 A1